# EUROPEAN PATENT SPECIFICATION

(11) **EP 4 086 469 B1**
(45) Date of publication and mention of the grant of the patent: **15.11.2023**
(21) Application number: 22171268.0
(22) Date of filing: 03.05.2022
(51) Int. Cl.: F16C 29/00, F16C 29/02, F16C 29/12

(54) **FLEXURE BASED PRELOAD MECHANISM**
BIEGEBASIERTER VORSPANNUNGSMECHANISMUS
MÉCANISME DE PRÉCHARGE BASÉ SUR LA FLEXION

(30) Priority: 06.05.2021 US 202163185154 P
(43) Date of publication of application: 09.11.2022
(73) Proprietor: Thorlabs Inc., Newton, New Jersey 07860 (US)
(72) Inventor: Gallagher, Jonathan, Newton, New Jersey (US); Mitchell, Brian, Newton, New Jersey (US); Morgus, Tyler, Newton, New Jersey (US)
(74) Representative: Grättinger Möhring von Poschinger Patentanwälte Partnerschaft mbB

(56) References cited:
- DE-A1- 10 300 876
- DE-B3-102013 004 212
- US-B2- 10 952 522

## Description

### CROSS REFERENCE TO RELATED APPLICATIONS

This application claims the benefit of U.S. Provisional Patent Application No. 63/185,154 filed on May 6, 2021.

### FIELD OF THE INVENTION

This invention relates generally to position controlling mechanism, and more particularly to a flexure based preloading mechanism for controlling position along a linear path.

### BACKGROUND

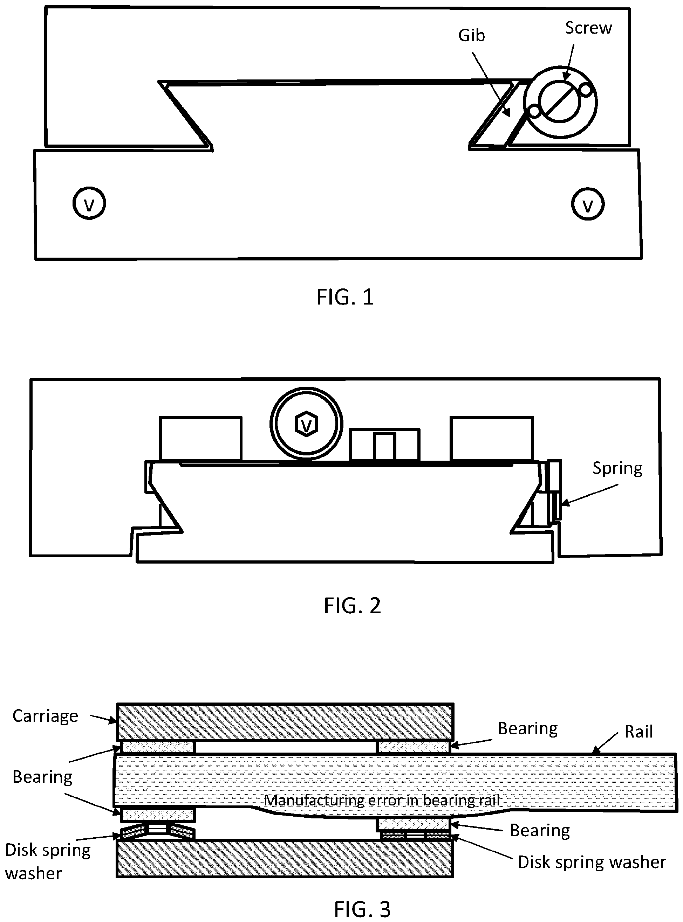

There have previously been two standard methods to apply preloads to translation systems, solid preload and spring preload. A solid preload is achieved by adding in an adjustable spacer that fits between translating surfaces which is known as a gib, shown in FIG. 1. Once the clearance is set, gib screws lock the gib in place applying the preload force. Controlling the solid preload is usually done by controlling the torque applied to gib screws.

A spring preload is created by using compression springs to force the gib into contract applying the preload. Controlling the spring preload is done by spring selection and setting compression length. Compression springs are usually assembled with a set screw, so controlling the compression length is an adjustment done by either set screw torque or thread engagement.

However, there are publications that discuss the limitations of previous solutions and suggest the need for an improvement. For example, in the technical field of linear translation designs, it is noted that while preloading is not possible with dovetail slides, clearance between the way surfaces can be adjusted via a gib, which is a ground steel spacer that runs the length of the saddle. In a technique of preload, it is noted that spring preloads are also more forgiving of slight misalignments or thermal expansion and contraction of components. The advantages of a solid preload are that system stiffness is high, and the design of a mechanical preload system straightforward. It is also noted that preload deflection is small, so preload can be lost by manufacturing error or wear, as illustrated in FIG. 3.

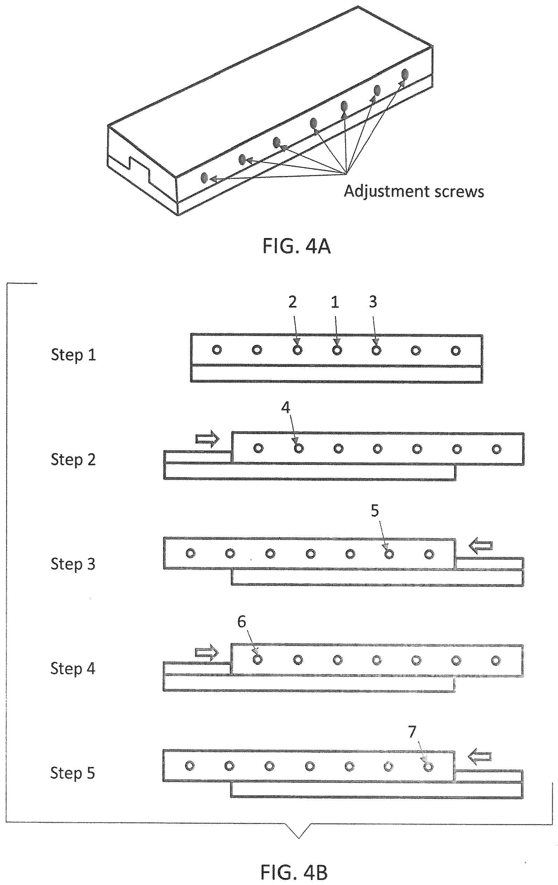

FIG. 4A is a translation system with adjustment screws for applying preload. The specific preload is depending on the operational conditions. Normally the appropriate range lies between 2% to 20% of the clearance C. A torque may be used for tightening the adjustment screws. In one technique of applying preload using screw torque and a specific tightening sequence, it is noted that applying the preload by using the adjusting screw should be carried out from the center of the rail outwards using the specific sequence as shown in FIG. 4B. However, the problems and limitations of these preload solutions are that as the carriage is moved along the rail, the second bearing rail's bolts are tightened. This is referred to as zippering the second rail. Extra care and caution must be exercised to not over constrain the system of rails and carriages in the plane of motion.
US 10,952,522 B2 discloses a backpack that comprises a series of durable fabric panels that have been sewn together to form a soft and expandable container, which has been equipped with ergonomic shoulder straps and numerous features for the homeless individual that help overcome many of the shortcomings and disadvantages of prior art.
DE 103 00 876 A1 discloses a glider unit for a door closure mechanism that comprises a main body provided with springy, laterally protruding sections which are in line or zone contact with the guide rail when the mechanism is at rest.
DE 10 2013 004212 B3 discloses that its device has a sheet metal strip, which is designed as a spring element, where the clamping screws are assigned to the sheet metal strip for adjusting the contact force of the spring element against the guide surface of the guideway or the wedge strip. The wedge strips or slide rails are resiliently mounted on a carriage head. The carriage head is expanded against one of the lateral guide surfaces of the guideway by a spring unit. The spring element is made of spring steel.

Therefore, there is a long-felt need for a solution to eliminate preload adjustments that remove play, fit clearances, from translation assemblies, without the above-mentioned problems and limitations of the existing techniques.

### SUMMARY

The problem that motivated the development of various embodiments of the present invention is to eliminate preload adjustments that remove play, fit clearances, from translation assemblies. All relating technologies use an adjustment mechanism to set clearances values to remove play between translating surfaces. The aspect that makes an embodiment of the present invention different is by applying a predefined preload value with a flexure mechanism that is optimized for product performance in which adjustments are not needed. A unique advantage of the present invention is that it simplifies translation mechanisms by removing components and fine adjustments.

One embodiment of the present invention provides a preloading mechanism including: a first part having a protrusion; and a second part having a recess that matches the protrusion; wherein the recess includes a gib that is flexibly movable via a flexure; wherein a dimension of the recess varies based on a flexing of the gib; when the gib is in a neutral state, the dimension of the recess is smaller than a corresponding dimension of the protrusion; when the gib is in a flexed state, the dimension of the recess is larger than the corresponding dimension of the protrusion; and when the protrusion is inserted into the recess, the gib is in an interfering state, providing a preload force for eliminating a clearance between a surface of the protrusion and a corresponding surface of the recess, wherein the flexing of gib in the interfering state is between those of the neutral state and flexed state.

### BRIEF DESCRIPTION OF THE DRAWINGS

FIG. 1 shows an adjustable spacer that fits between translating surfaces.
FIG. 2 shows that a spring preload is created by using compression springs to force the gib into contract, applying the preload.
FIG. 3 shows that preload can be lost by manufacturing error or wear.
FIG. 4A shows a translation system with adjustment screws, and FIG. 4B shows a technique of applying preload using screw torque and a specific tightening sequence.
FIG. 5A shows a flexure based preloading mechanism according to an embodiment of the present invention, and FIG. 5B is an enlarged view of the gib and flexure.
FIG. 6A shows a gib in a neutral state, and FIG. 6B shows a gib in a flexed state according to an embodiment.

### DETAILED DESCRIPTION OF THE PREFERRED EMBODIMENTS

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

This disclosure describes the best mode or modes of practicing the invention as presently contemplated. This description is not intended to be understood in a limiting sense, but provides an example of the invention presented solely for illustrative purposes by reference to the accompanying drawings to advise one of ordinary skill in the art of the advantages and construction of the invention. In the various views of the drawings, like reference characters designate like or similar parts.

A linear translation stage is a precise motion system used to restrict an object to a single axis of motion. Linear translation stages include a platform that moves relative to a base. The motions between the platform and base are precisely restricted to one dimension. Typically, either one of the platform or base has a protrusion and the other one of the platform or base has a matching recess, such that the relative motion the platform can slide relative to the base as guided by the protrusion being fitted in the recess. In order to have a precise control of the position of the stage, a preload is applied between the platform and base such that one side of the protrusion is urged against the corresponding side of the recess, thus removing unwanted play between these surfaces. As already discussed above, the existing techniques for applying preload have many limitations.

The flexure based preloading mechanism according to one embodiment overcomes the limitations of previous solutions by eliminating the need for preload adjustments. In the following discussions, the dovetail design is used as a non-limiting example for illustrating various aspects of the invention. In a dovetail design, the protrusion resembles a dove's tail and the recess has a matching shape. It is understood that the principle of the present invention also applies to other designs, such as a T-slot design, etc.

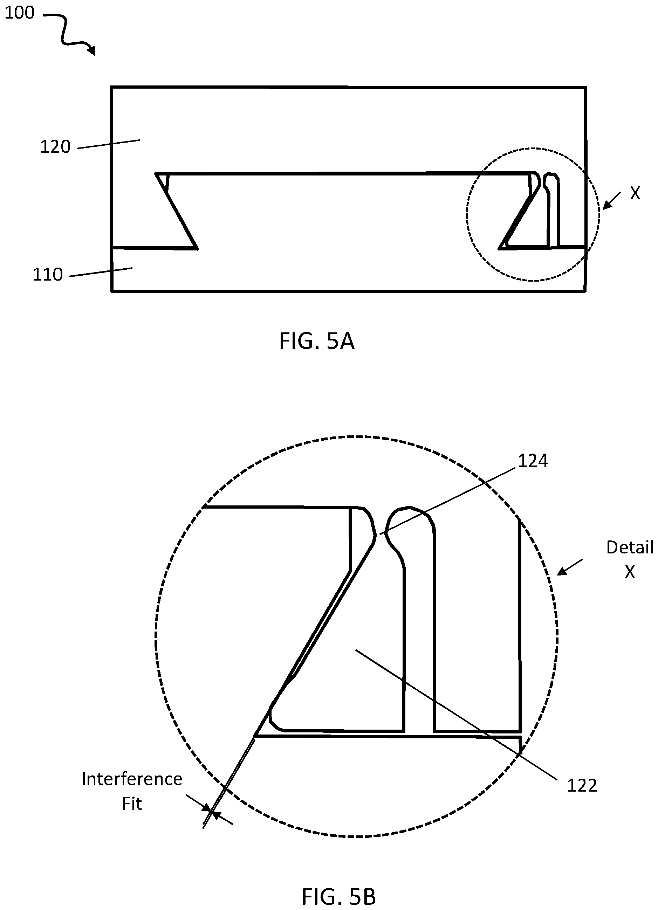

In one embodiment, the protrusion in a dovetail design has a reverse trapezoidal shape, and the recess has a corresponding trapezoidal shape. FIG. 5A shows a preloading mechanism 100 with a first component 110 having a protrusion fitted with a second component 120 having a recess that matches the profile of the protrusion. In the detailed cross-sectional view shown in FIG. 5B, the gib 122 has a triangular cross-section flexibly connected to the component 120 via a flexure 124. The surface of the gib matches a corresponding face of the protrusion as shown. In order to avoid too much friction between the two surfaces, the gib has a nub to make contact with the protrusion.

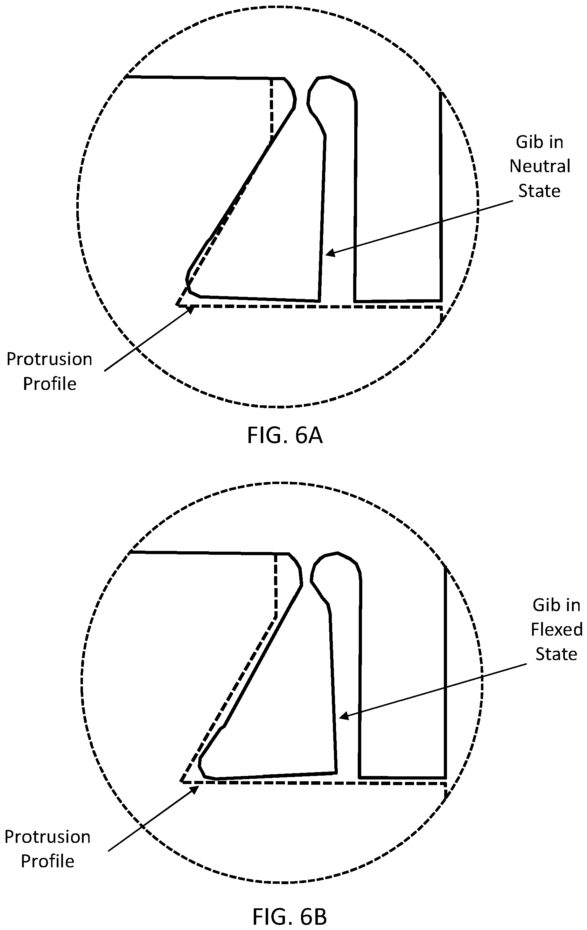

The mechanism is manufactured with an intentional interference fit between two components (110 and 120) as shown in FIG 5B. FIG. 6A shows the gib in the neutral state and FIG. 6B shows the gib in a flexed state. When inserting component 110 into component 120, component 120's gib 122 is flexed open to provide clearance for component 110. The flex is controlled to be within the elastic deformation limits, so once the components are assembled, the flexed gib is released back to a state of interfering. As shown in FIG. 6A, if allowed to be in the neutral state, the gib would have invaded into the space occupied by the component 110. As a result, the returning flexed gib of component 120 falls into the interference state (between the neutral state and flexed state), which provides a preload force onto the dovetail of component 110 and removes unwanted play from the mechanism.

As discussed in previous examples it is component variations due to traditional machining practices that actual preload forces values may vary from one assembly to the next. So, to account for component fit tolerances, the adjustments done to preload during the final steps of assembly are needed to give consistent performance. The aspect that makes the solution according to one embodiment possible is utilizing an advancement in machining technique, a Wire EDM operation, to significantly reduce tolerances of mating dovetail components. This allowed for the interference specification to be optimized to provide a preload value that is consistent through tolerance variations to provide consistent performance. In a basic summary the preload force is designed into the component's shape.

An advantage of an embodiment of the present invention is that no preload adjustment is needed for each component manufactured because the flexure can provide a minimum preload force necessary to remove the play between surfaces when the components are manufactured within the fit tolerance limits.

The present invention has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the invention. Furthermore, the foregoing describes the invention in terms of embodiments foreseen by the inventor for which an enabling description was available.

## Claims

1. A linear translation stage (100) comprising:
a base; and
a platform that moves relative to the base;
**characterized in that**:
one of the base and platform (110) comprises a protrusion; and
the other one of the base and platform (120) comprises a recess that matches the protrusion;
wherein the recess comprises one gib (122) that is flexibly movable via a flexure (124);
wherein a dimension of the recess varies based on a flexing of the gib;
when the gib is in a neutral state, the dimension of the recess is smaller than a corresponding dimension of the protrusion;
when the gib is in a flexed state, the dimension of the recess is larger than the corresponding dimension of the protrusion; and
when the protrusion is inserted into the recess, the gib is in an interfering state, providing a preload force for eliminating a clearance between a surface of the protrusion and a corresponding surface of the recess such that relative motion between the platform and base is restricted to a single axis,
wherein the flexing of the gib in the interfering state is between the flexing of the neutral state and the flexing of the flexed state.

2. The linear translation stage of claim 1, wherein the interfering state comprises a range of flexing of the gib, such that a minimum preload is maintained when a variation in the corresponding dimension of the protrusion lies within a corresponding range.

3. The linear translation stage of claim 1, further comprising a locking mechanism to stop the first part from moving relative to the second part.

4. The linear translation stage of claim 1, further comprising an actuator to move the first part relative to the second part.

5. The linear translation stage of claim 1, further comprising a bearing to provide a smooth relative movement between the first part and second part.

6. The linear translation stage of claim 1, wherein a cross-section of the protrusion is a dovetail shape and the gib has a triangular cross-section such that the preload force is designed into the dovetail shape.

7. The linear translation stage of claim 1, wherein a cross-section of the protrusion is a T shape.

8. The linear translation stage of claim 1, wherein the gib comprises a nub to make contact with the protrusion.

## Patentansprüche

1. Tisch für lineare Verschiebung (100), der Folgendes aufweist:
eine Basis; und
eine Plattform, die sich relativ zu der Basis bewegt;
**dadurch gekennzeichnet, dass**:
die Basis oder die Plattform (110) einen Vorsprung aufweist; und
die andere der Basis oder der Plattform (120) eine Aussparung aufweist, die dem Vorsprung entspricht;
wobei die Aussparung einen Bolzen (122) aufweist, der elastisch über eine Biegung (124) bewegbar ist;
wobei eine Abmessung der Aussparung basierend auf einer Biegung des Bolzens variiert;
wenn sich der Bolzen in einer neutralen Position befindet, ist die Abmessung der Aussparung kleiner als eine entsprechende Abmessung des Vorsprungs;
wenn sich der Bolzen in einer gebogenen Position befindet, ist die Abmessung der Aussparung größer als die entsprechende Abmessung des Vorsprungs; und
wenn der Vorsprung in die Aussparung eingeführt wird, befindet sich der Bolzen in einem überlagernden Zustand, was eine Vorspannkraft zum Eliminieren eines Freiraums zwischen einer Fläche des Vorsprungs und einer entsprechenden Fläche der Aussparung erzeugt, sodass eine Relativbewegung zwischen der Plattform und der Basis auf eine einzelne Achse beschränkt wird,
wobei die Biegung des Bolzens in dem überlagernden Zustand eine Biegung zwischen der Biegung in dem neutralen Zustand und der Biegung in dem gebogenen Zustand ist.

2. Tisch für lineare Verschiebung nach Anspruch 1, wobei der überlagernde Zustand einen Biegungsbereich des Bolzens umfasst, sodass eine Mindestvorspannung beibehalten wird, wenn eine Variation in der entsprechenden Abmessung des Vorsprungs innerhalb eines entsprechenden Bereichs liegt.

3. Tisch für lineare Verschiebung nach Anspruch 1, der ferner einen Verriegelungsmechanismus aufweist, um zu verhindern, dass sich der erste Teil relativ zu dem zweiten Teil bewegt.

4. Tisch für lineare Verschiebung nach Anspruch 1, der ferner einen Aktuator aufweist, um den ersten Teil relativ zu dem zweiten Teil zu bewegen.

5. Tisch für lineare Verschiebung nach Anspruch 1, der ferner ein Lager aufweist, um eine glatte Relativbewegung zwischen dem ersten Teil und dem zweiten Teil zu ermöglichen.

6. Tisch für lineare Verschiebung nach Anspruch 1, wobei ein Querschnitt des Vorsprungs eine Zinkenform aufweist und der Bolzen einen dreieckigen Querschnitt aufweist, sodass die Vorspannkraft in der Zinkenform aufgenommen wird.

7. Tisch für lineare Verschiebung nach Anspruch 1, wobei ein Querschnitt des Vorsprungs eine T-Form aufweist.

8. Tisch für lineare Verschiebung nach Anspruch 1, wobei der Bolzen eine Noppe aufweist, um den Vorsprung zu berühren.

## Revendications

1. Etage de translation linéaire (100) comprenant :
un socle ; et
une plateforme qui se déplace par rapport à la base ;
**caractérisé en ce que** :
l'une de la base et de la plate-forme (110) comprend une protubérance ; et
l'autre de la base et la plate-forme (120) comprend un évidement qui correspond à la protubérance ;
dans lequel l'évidement comprend un lardon (122) qui est mobile de manière flexible via une flexion (124) ;
dans lequel une dimension de l'évidement varie en fonction d'une flexion du lardon ;
lorsque le lardon est dans un état neutre, la dimension de l'évidement est inférieure à une dimension correspondante de la protubérance ;
lorsque le lardon est dans un état fléchi, la dimension de l'évidement est supérieure à la dimension correspondante de la protubérance ; et
lorsque la protubérance est insérée dans l'évidement, le lardon est dans un état d'interférence, fournissant une force de précharge pour éliminer un jeu entre une surface de la protubérance et une surface correspondante de l'évidement de telle sorte que le mouvement relatif entre la plate-forme et la base soit limité à un seul axe, dans lequel la flexion du lardon dans l'état interférent se situe entre la flexion de l'état neutre et la flexion de l'état fléchi.

2. Etage de translation linéaire selon la revendication 1, dans lequel l'état interférent comprend une plage de flexion du lardon, telle qu'une précharge minimale soit maintenue lorsqu'une variation de la dimension correspondante de la protubérance se situe dans une plage correspondante.

3. Etage de translation linéaire selon la revendication 1, comprenant en outre un mécanisme de verrouillage pour empêcher la première partie de se déplacer par rapport à la deuxième partie.

4. Etage de translation linéaire selon la revendication 1, comprenant en outre un actionneur pour déplacer la première partie par rapport à la deuxième partie.

5. Etage de translation linéaire selon la revendication 1, comprenant en outre un roulement pour assurer un mouvement relatif fluide entre la première partie et la deuxième partie.

6. Etage de translation linéaire selon la revendication 1, dans lequel une section transversale de la protubérance est en forme de queue d'aronde et le lardon a une section transversale triangulaire de telle sorte que la force de précharge est conçue en forme de queue d'aronde.

7. Etage de translation linéaire selon la revendication 1, dans lequel une section transversale de la protubérance est une forme en T.

8. Etage de translation linéaire selon la revendication 1, dans lequel le lardon comprend une protubérance pour entrer en contact avec la protubérance.
